# EUROPÄISCHE PATENTSCHRIFT

(11) **EP 2 547 910 B1**
(45) Veröffentlichungstag und Bekanntmachung des Hinweises auf die Patenterteilung: **16.05.2018**
(21) Anmeldenummer: 11708702.3
(22) Anmeldetag: 25.02.2011
(51) Int. Cl.: F04D 25/06, F04D 29/52, F04D 29/056, H02K 5/08

(54) **AUSSENLÄUFER-MOTOR LÜFTER MIT INTEGRIERTEN LAGERGEHÄUSE UND KASTEN FÜR STEUERELEKTRONIK**
OUTER ROTOR MOTOR FAN WITH INTEGRATED BEARING CARTRIDGE AND CABINET FOR CONTROL ELECTRONICS
VENTILATEUR À MOTEUR À ROTOR EXTÉRIEUR AVEC CARTER DE PALIERS ET LOGEMENT POUR L'ÉLECTRONIQUE DE CONTRÔLE INTÉGRÉS

(30) Priorität: 15.03.2010 DE 202010003890 U
(43) Veröffentlichungstag der Anmeldung: 23.01.2013
(73) Patentinhaber: Ebm-Papst St. Georgen GmbH & CO. KG, 78112 St. Georgen (DE)
(72) Erfinder: WAGNER, Thomas, 78112 St. Georgen (DE); ROJO, Francisco, 78112 St. Georgen (DE)
(74) Vertreter: Peter, Julian
(86) Internationale Anmeldenummer: PCT/EP2011/000934
(87) Internationale Veröffentlichungsnummer: WO 2011/113521

(56) Entgegenhaltungen:
- WO-A1-98/19382
- DE-U1- 20 302 576
- DE-U1-202005 003 689
- GB-A- 2 461 168
- JP-A- 11 166 500
- US-A1- 2005 012 411
- US-A1- 2008 118 379
- US-A1- 2010 054 965
- US-B1- 6 170 275
- US-B1- 6 278 207

## Beschreibung

Die Erfindung betrifft einen Außenläufermotor, und sie betrifft einen Lüfter mit einem zu dessen Antrieb dienenden Außenläufermotor.

Solche Lüfter werden in großen Stückzahlen verwendet, vor allem zur Kühlung von elektronischen Geräten, z.B. Computern, Servern, leistungsstarken Fernsehgeräten etc.

Dabei wird großer Wert auf eine preiswerte, aber doch robuste Bauweise gelegt, die eine lange Lebensdauer des Lüfters ermöglicht.

Die US 2005/0012411 A1 zeigt einen Impeller mit einem Innenstator mit einem Blechpaket und einer Wicklungsanordnung. Der Innenstator hat eine zentrale Ausnehmung zur Lagerung einer Welle. Ein vom Innenstator durch einen magnetisch wirksamen Luftspalt getrennter permanentmagnetischer Rotor hat auf seiner Außenseite Impellerflügel und eine Welle, welche in einem Lagerrohr angeordnet ist. Am Innenstator ist ein Bereich des Basisgehäuses vorgesehen, und auf der Innenseite des Basisgehäuses ist das Lagerrohr angeordnet. Das Lagerrohr ist von einer Umspritzung des Innenstators gebildet. Dieselbe Umspritzung bildet das Lüftergehäuse und weist einen Hohlraum zur Aufnahme von elektrischen Bauelementen auf.

Die WO 98/19382 zeigt einen Lüfter mit einem elektronisch kommutierten Gleichstrommotor. Der Außenläufermotor hat einen Innenstator mit einem Blechpaket und einer Wicklung. Der Innenstator hat eine zentrale Ausnehmung zur Lagerung einer Welle und einen durch einen Luftspalt getrennten permanentmagnetischen Rotor, welcher auf seiner Außenseite mit Lüfterflügeln versehen ist und welcher eine in der zentralen Ausnehmung des Innenstators angeordnete Welle hat. Der Innenstator ist auf ein Kunststoffteil augeschoben, das sowohl einen Flanschabschnitt als auch einen Lagerrtragrohrabschnitt hat. Der am Kunststoffteil befestigte Innenstator wird mit einem thermoplastischen Schmelzkleber umspritzt. Dabei wird auch die dem Luftspalt zugewandte Seite des Innenstators umspritzt.

Es ist deshalb eine Aufgabe der Erfindung, einen neuen Außenläufermotor und einen Lüfter der eingangs genannten Art bereit zu stellen.

Nach der Erfindung wird diese Aufgabe gelöst durch den Gegenstand des Anspruchs 1. Ein solcher Lüfter hat eine sehr einfache Bauweise und kann deshalb preiswert hergestellt werden. Bei seiner Herstellung kann in einem Arbeitsgang das Lagerrohr des Motors, mindestens ein Teil der Isolation des Innenstators, und das Außengehäuse des Lüfters hergestellt werden. Auch ergibt sich ein verbesserter Wirkungsgrad des Motors, da der Blechquerschnitt des Stators ohne Vergrößerung der äußeren Abmessungen des Lüfters vergrößert werden kann, was eine höhere Lüfterdrehzahl und damit eine höhere Lüfterleistung ermöglicht.

Dies ermöglicht auch eine kompakte Bauweise, und die Möglichkeit, unter einer größeren Zahl von Rotormagneten zu wählen, und es ist besser möglich, die Kosten zu optimieren.

Die Erfindung ermöglicht also die Herstellung eines besseren Produkts mit reduzierten Kosten.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: einen Längsschnitt durch das tragende Grundgerüst eines Außenläufermotors einschließlich seines Innenstators und seines Lüftergehäuses,
- Fig. 2: eine perspektivische Ansicht der Grundstruktur der Fig. 1, gesehen etwa in Richtung des Pfeiles II der Fig. 1,
- Fig. 3: eine Darstellung analog Fig. 1, wobei aber eine Leiterplatte montiert ist, auf der sich elektrische Bauteile des Motors befinden,
- Fig. 4: eine vergrößerte Darstellung der Einzelheit IV der Fig. 3,
- Fig. 5: eine Draufsicht, gesehen in Richtung des Pfeiles V der Fig. 3,

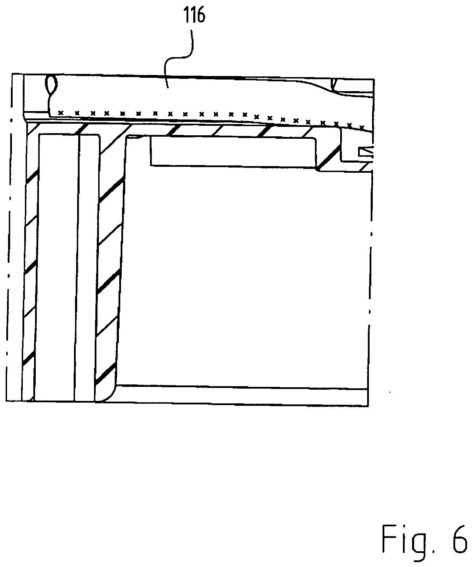

- Fig. 6: einen Schnitt, gesehen in Richtung der Linie VI-VI der Fig. 5,

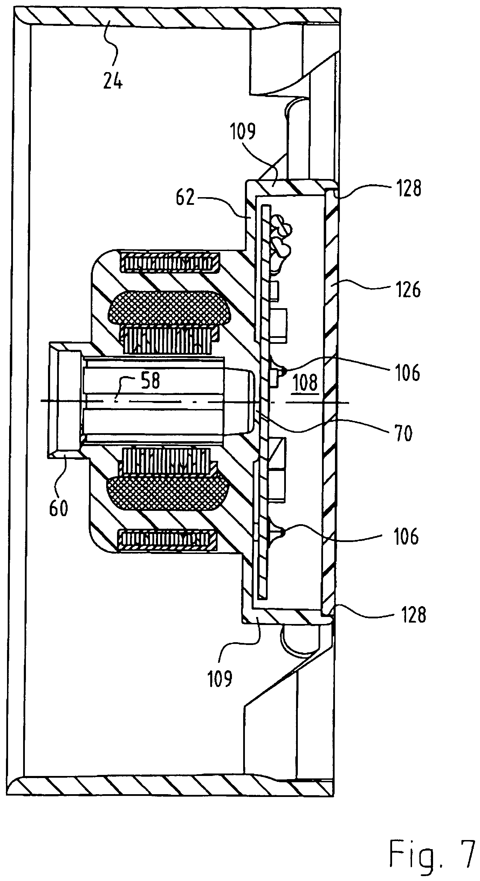

- Fig. 7: eine Darstellung analog Fig. 3, aber in verschlossenem Zustand,
- Fig. 8: eine Variante zu Fig. 7,
- Fig. 9: eine Darstellung analog Fig. 7, bei der Montage des permanentmagnetischen Rotors,
- Fig. 10: eine Schnittdarstellung des Motors der Fig. 9 im montierten Zustand, gesehen längs der Linie X-X der Fig. 12,
- Fig. 11: eine Vergrößerung der Einzelheit XI der Fig. 10, bei der zusätzlich ein Montagewerkzeug angedeutet ist,
- Fig. 12: eine Draufsicht, gesehen längs des Pfeiles XII der Fig. 10,
- Fig. 13: identische ausgeprägte Pole 140, 142, 144, 146 und einen magnetischen Rückschluss 148, innerhalb dessen sich - beim fertigen Lüfter - das Lagerrohr 56 (Fig. 1) befindet.
- Fig. 14: eine Schnittdarstellung eines Kontaktstifts, der zum Anschluss des Innenstators an eine Leiterplatte dient.

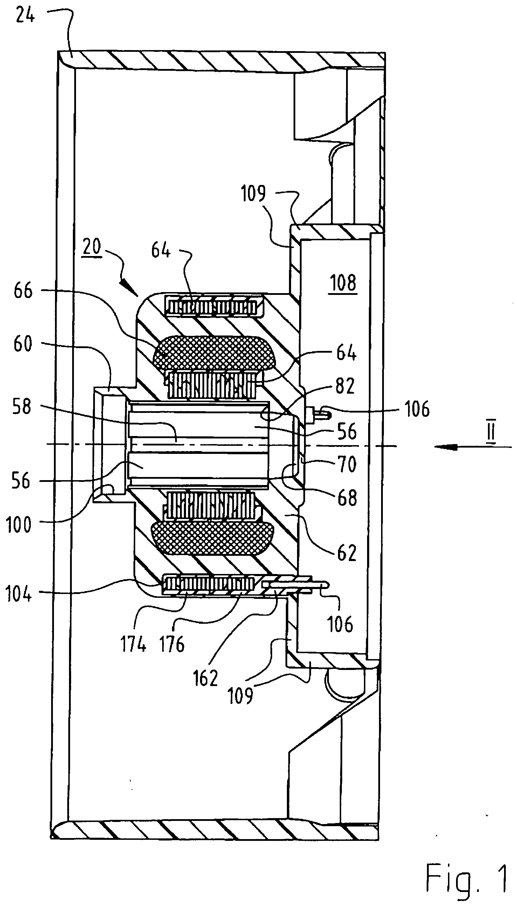

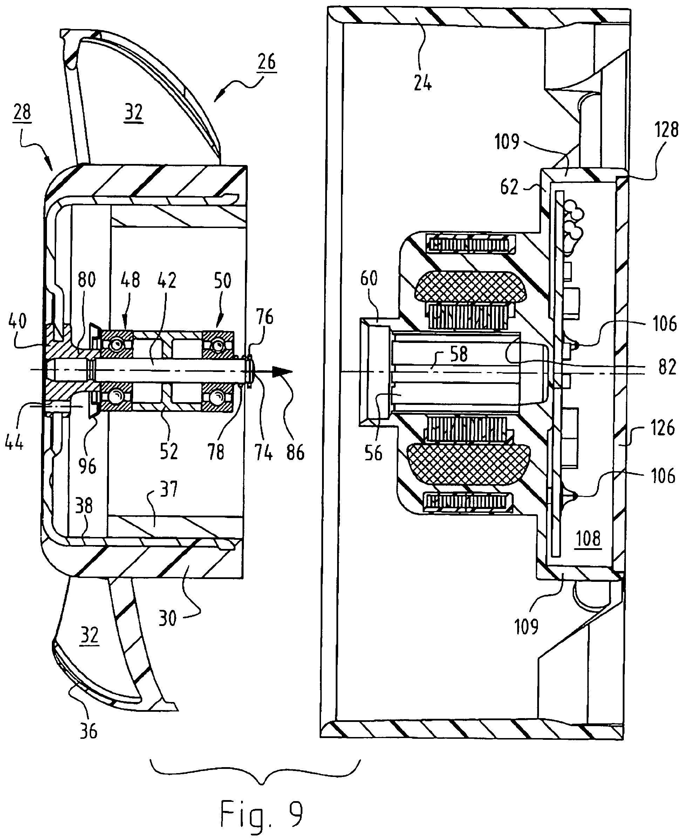

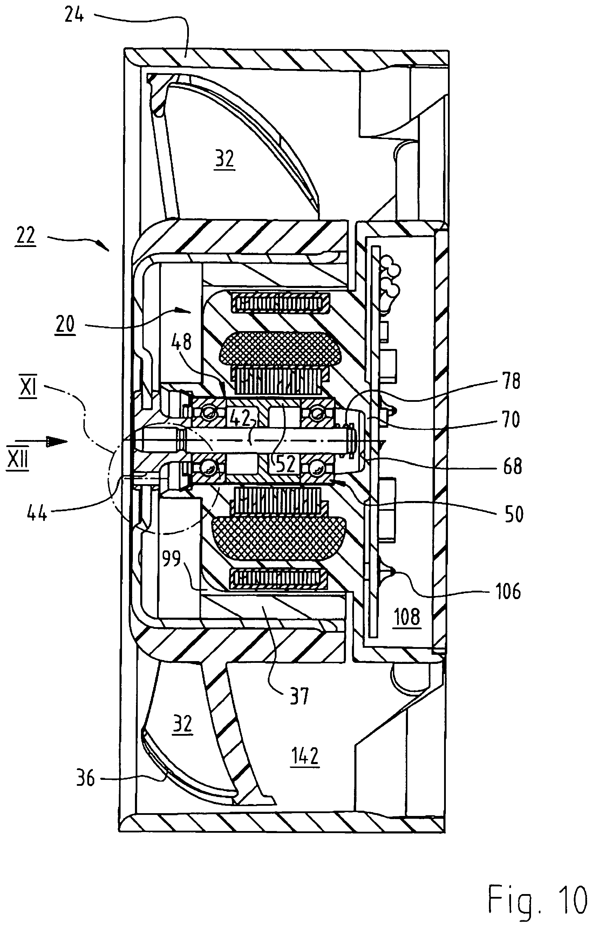

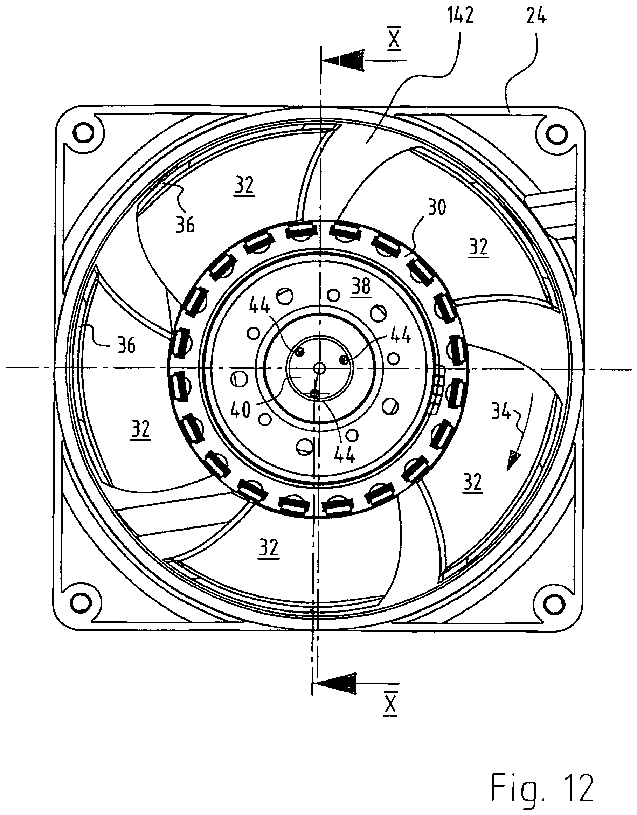

**Fig. 1** zeigt einen Längsschnitt durch den Innenstator 20 eines in Fig. 10 dargestellten Außenläufermotors 22 und seines Lüftergehäuses 24, in welchem sich im Betrieb ein Lüfterrad 26 (Fig. 9) dreht. Letzteres wird gebildet von einem Außenrotor 28, auf dessen Außenumfang 30 Lüfterflügel 32 ausgebildet sind. Die Drehrichtung des Außenrotors 28 ist in Fig. 12 mit 34 bezeichnet.

Bevorzugt hat jeder Lüfterflügel 32 an seiner äußeren Peripherie eine Verbreiterung 36, um den Wirkungsgrad des Lüfterrads 26 zu verbessern.

Wie **Fig. 9** zeigt hat der Außenrotor 28 einen topfförmigen magnetischen Rückschluss 38 aus Weicheisen, und dieser ist in seinem Zentrum mit einer Nabe 40 verbunden, in der eine Welle 42 in der dargestellten Weise befestigt ist. Die Nabe 40 hat Durchbrechungen 44, die bei der Montage des Lüfters Verwendung finden und deren Funktion nachfolgend näher erläutert wird.

Die Welle 42 hat zu ihrer Lagerung zwei Wälzlager, nämlich ein erstes Wälzlager 48 auf der dem Rotor 28 zugewandten Seite der Welle 42, und ein zweites Wälzlager 50 auf der vom Rotor 28 abgewandten Seite der Welle 42. Zwischen den Außenringen der Wälzlager 48, 50 befindet sich ein Distanzglied 52, vgl. Fig. 9. Dieses ist auf der Welle 42 geführt.

Zur Aufnahme der Wälzlager 48, 50 und des Distanzglieds 52 dient ein Lagerrohr 56, das in Fig. 1 dargestellt ist. Auf seinem Innenumfang hat es Längsrippen 58, deren radial innere Enden eine kreisförmige Hüllkurve definieren. In den Rippen 58 sind die Außenringe der beiden Wälzlager 48, 50 geführt.

Das Lagerrohr 56 geht nach links über in einen Kragen 60, vgl. Fig. 1. Es geht ferner über in eine teilweise isolierende Umhüllung 62 des Innenstators 20, dessen in üblicher Weise packetiertes Statorblechpaket mit 64 und dessen Wicklungsanordnung mit 66 bezeichnet ist.

In dieser Umhüllung 62 ist in Fortsetzung des Lagerrohres 56 eine napfartige Ausnehmung 68 vorgesehen, deren Boden 70 das Lagerrohr 56 an dieser Stelle flüssigkeitsdicht verschließt.

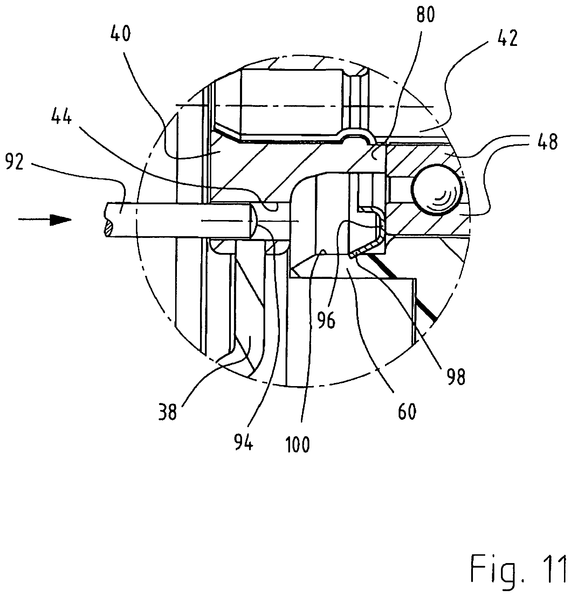

Wie **Fig. 10** zeigt, bildet der Boden 70 einen axialen Toleranzbereich für das freie Ende 74 (Fig. 9) der Welle 42, d.h. das freie Ende 74 liegt nicht gegen den Boden 70 an. Im Bereich des freien Endes 74 ist ein Sprengring 76 in einer Nut der Welle 42 vorgesehen, und zwischen diesem Sprengring 76 und dem Innenring des Wälzlagers 50 ist eine Druckfeder 78 vorgesehen, welche die Innenringe der Wälzlager 48, 50 gegen einander verspannt, da ein Vorsprung 80 (Fig. 11) der Nabe 40, welch letztere mit der Welle 42 fest verbunden ist, gegen den Innenring des Wälzlagers 48 anliegt, während in Fig. 9 die Feder 78 den Innenring des Wälzlagers 50 nach links drückt, so dass die Innenringe der Wälzlager 48, 50 gegeneinander verspannt werden.

Wie Fig. 10 zeigt, liegt der Außenring des Wälzlagers 50 gegen eine Schulter 82 (Fig. 1) des Lagerrohres 56 an und ist in dieser Stellung fixiert. Der Innenring des Wälzlagers 48 ist verschiebbar (Loslager) auf der Welle 42 angeordnet, so dass letztere in Fig. 10 nach rechts gepresst wird. Auf diese Weise können die beiden Wälzlager 48, 50 sowohl ein Radial- wie ein Axiallager für den Außenrotor 28 bilden.

Wie Fig. 9 zeigt, werden die beiden Wälzlager 48, 50 in Richtung eines Pfeiles 86 in die Längsrippen 58 des Lagerrohres 56 eingepresst. Dies geschieht mit Hilfe von Stiften 92, welche durch die Durchbrechungen 44 der Nabe 40 durchgesteckt werden. Fig. 11 zeigt nur einen dieser Stifte 92, die bei der Montage mit ihrem in Fig. 11 rechten Ende 94 gegen ein Befestigungsglied 96 anliegen und dieses gegen den Außenring des Wälzlagers 48 pressen, wobei durch das Distanzglied 52 (Fig. 9) auch der Außenring des Wälzlagers 50 nach rechts verschoben und zur Anlage gegen die Schulter 82 des Lagerrohres 56 gebracht wird. Auf diese Weise werden die Außenringe beider Wälzlager 48, 50 im Lagerrohr 56 fixiert.

Das Befestigungsglied 96 wird dadurch im Kragen 60 in der erreichten Stellung fixiert, da es mit seinem scharfen, frustokonischen Rand 98 (Fig. 11) in die Innenseite 100 des Kragens 60 einschneidet und sich deshalb in Fig. 11 nicht mehr nach links verschieben kann. Auf diese Weise erreicht man eine sichere und spielfreie Montage der Wälzlager 48, 50 im Lagerrohr 56, und das Befestigungsglied 96 bewirkt eine Verkrallung und Kippsicherung für die Wälzlager 48 und 50.

Wie Fig. 10 zeigt, befindet sich zwischen dem Innnenrotor 20 und dem Magneten 37 des Rotors 28 ein magnetisch wirksamer Luftspalt 99.

Der Innenstator 20 wird beim Spritzgießvorgang voll mit einem Kunststoff 62 umhüllt. Als Kunststoffe eignen sich u. a.:
Polyamide, z.B. Ultramid® A3X2G5 oder Polyamid 66
PBT, z.B. Technyl (PBT-G20FR)
Diese Kunststoffe können mit Fasern verstärkt werden, z. B. mit etwa 20 % bis etwa 25 % Glasfüllstoffen. Diese Stoffe können verschweißt werden, z. B. durch Ultraschallschweißen oder durch Laserschweißen. Alternativ sind Klebeverbindungen, Dichtungen oder Dichtelemente möglich, z.B. in Form von 2K-Kunststoffteilen.

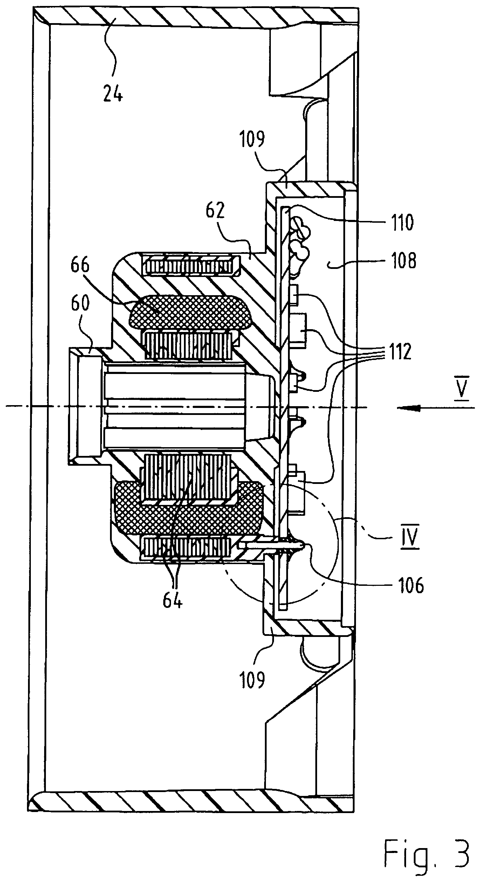

Wie z. B. die Fig. 1 und 3 zeigen, hat das Statorblechpaket 64 eine Nutisolation 104, welche einen Spulenkörper bildet, in den die Statorwicklungsanordnung 66 gewickelt ist, deren Form und Aufbau von der Verwendung des Motors abhängt und die deshalb nur schematisch dargestellt ist.

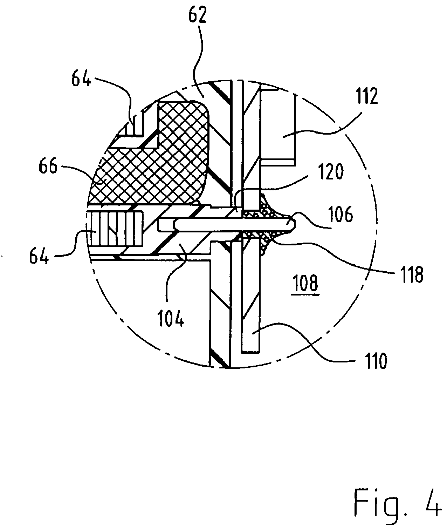

Wie Fig. 4 zeigt, sind in dieser Nutisolation 104 Kontaktstifte 106 befestigt, die in Fig. 4 nach rechts ragen. (Fig. 4 zeigt nur einen dieser Kontaktstifte.) An diesen Kontaktstiften 106 kann ein Ende eines Drahtes 154 der Statorwicklungsanordnung 66 elektrisch und mechanisch befestigt werden. Am Innenstator 20 sind bei diesem Ausführungsbeispiel insgesamt vier solche Stifte 106 vorgesehen.

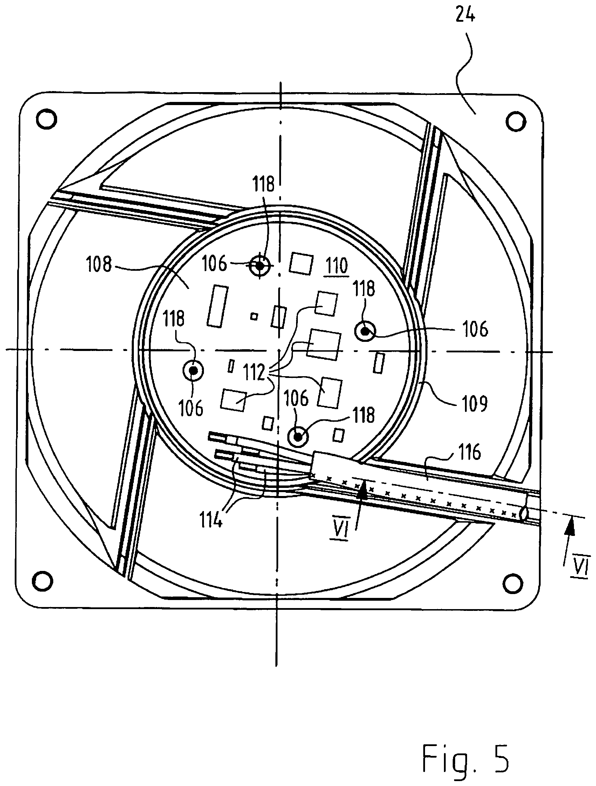

Die Stifte 106 ragen bei Fig. 1 und folgende in einen Hohlraum 108, dessen Seitenwand mit 109 bezeichnet ist und in dem sich gemäß Fig. 3 eine Leiterplatte 110 befindet, auf der elektrische Bauteile 112 für den Motor 20 angeordnet sind. Wie Fig. 5 zeigt, sind an die Leiterplatte 110 Litzen 114 eines Anschlusskabels 116 angeschlossen. Auch sind an Leiterbahnen der Leiterplatte 110 die Stifte 106 durch Lötverbindungen 118 angelötet, vgl. Fig. 4. Die Leiterplatte 110 wird durch Distanzglieder 120 (Fig. 4) im Abstand von der Kunststoff-Umhüllung 62 gehalten, welch letztere auch den Boden und die Seitenwand 109 des Hohlraums 108 bildet.

Nach der Bestückung mit der Leiterplatte 110 und nach dem Anschluss der Litzen 114 (Fig.5) wird der Hohlraum 108 durch einen Deckel 126 verschlossen. Dieser kann z. B. durch Ultraschall an Schweißfugen 128 mit der Seitenwand 109 verschweißt werden, oder durch eine Klebeverbindung.

Besonders vorteilhaft ist hier, dass die Leiterplatte 110 mit den elektrischen Bauteilen 112 in einem Hohlraum 108 angeordnet ist, so dass die Bauteile 112 nicht mit Kunststoff umspritzt werden, was durch die Volumenänderung beim Erstarren des Umgussmaterials bewirken könnte, dass die Bauteile 112 von der Leiterplatte 110 abgerissen werden. Diese Gefahr besteht hier nicht. Jedoch ist es auch nicht ausgeschlossen, in manchen Fällen Bauteile 112 mit Kunststoff zu umspritzen ooder mit einem Schutzlack zu versehen.

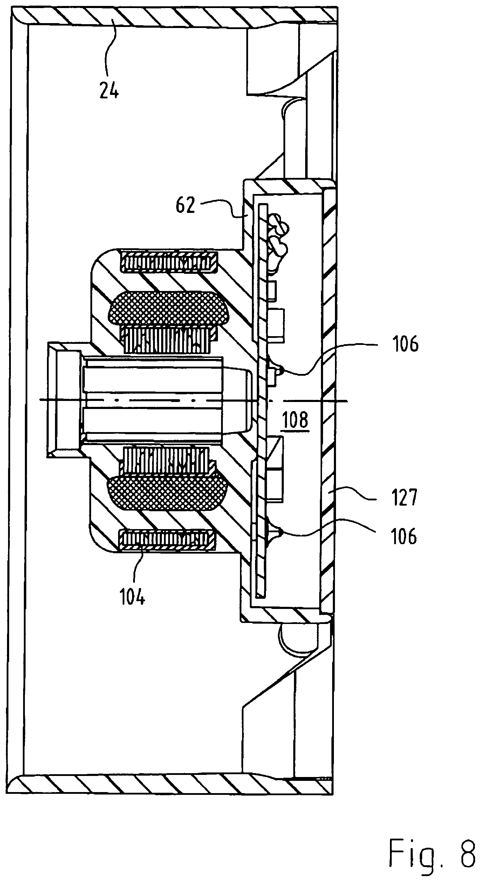

Statt eines Deckels 126 kann auch eine Verschlusskappe 127 verwendet werden, wie das beispielhaft in Fig. 8 dargestellt ist. Die Verschlusskappe 127 kann z. B. durch Schweißen oder Kleben befestigt werden.

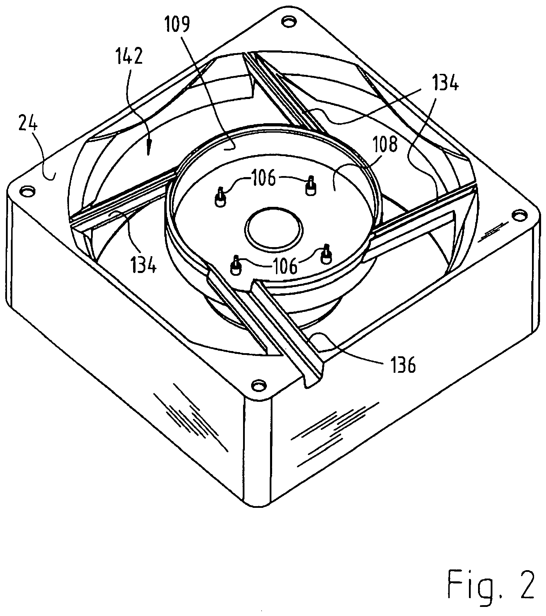

Wie Fig. 2 zeigt, ist die Wand 109 des Hohlraums 108 über drei einfache Speichen 134 und eine rinnenförmige Speiche 136 mit dem Lüftergehäuse 24 verbunden, das eine Luftdurchtrittsöffnung 142 nach Art eines Venturikanals bildet. Die Speiche 136 dient zur Führung des Kabels 116, vgl. Fig. 5. Das Kabel 116 ist durch eine (nicht sichtbare) Gummidichtung abgedichtet.

Das Lüftergehäuse 24 ist also durch die Speichen 134, 136 einstückig mit einem Teil der Wand des Hohlraums 108 und einstückig mit der Umhüllung des Innenstators 20 ausgebildet, so dass alle diese Teile in einem einzigen Arbeitsgang durch Herstellung einer Kunststoffschicht hergestellt werden können, was die Produktion vereinfacht und beschleunigt und zudem Kosten reduziert. Da auch die Montage des Rotors 28 stark vereinfacht ist, ergibt sich ein preiswertes Produkt mit hervorragenden Eigenschaften und hoher Lebensdauer.

In Fig. 9 ist bei 37 der Permanentmagnet des Rotors 28 dargestellt, der im magnetischen Rückschluss 38 befestigt ist. Seine Magnetisierung kann zweipolig, vierpolig, sechspolig etc. ausgeführt sein.

Fig. 10 zeigt, wie die Flügel 32 in den Venturikanal 142 ragen.

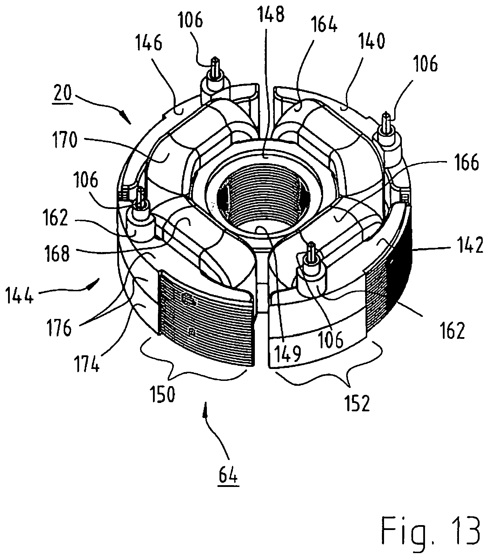

Fig. 13 zeigt eine raumbildliche Darstellung eines fertig bewickelten Innenstators 20, der sozusagen als Vorprodukt bei der Herstellung eines Motors bzw. Lüfters dient. Sein Statorblechpaket 64 hat bei diesem Beispiel vier identische ausgeprägte Pole 140, 142, 144, 146, und einen magnetischen Rückschluss 148 mit einer zentralen Ausnehmung 149, innerhalb deren sich - beim fertigen Lüfter - das Lagerrohr 56 (Fig. 1) mit seinen Längsrippen 158 befindet.

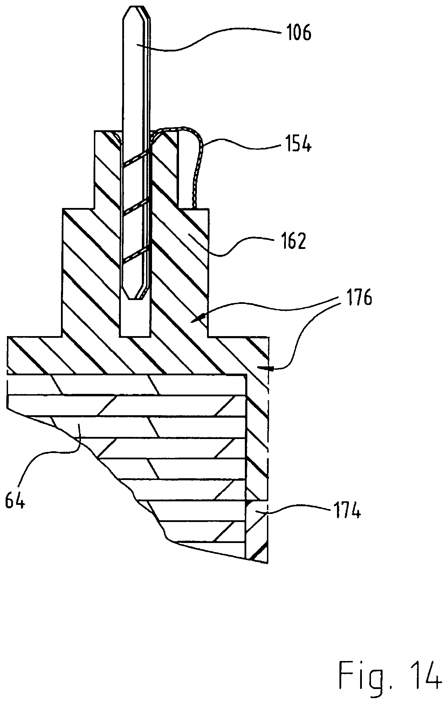

Die Pole 140 bis 146 haben bei diesem Ausführungsbeispiel auf ihrer dem Luftspalt 99 (Fig. 10) zugewandten Seite unterschiedliche Außendurchmesser. Ein Abschnitt 150 mit größerem Durchmesser ist in diesem Zustand noch nicht von Kunststoff bedeckt. Ein Abschnitt 152 mit kleinerem Durchmesser ist hier mit einer Isolation aus zwei aufgesteckten Halbschalen 174, 176 bedeckt. Für diese Bedeckung des Innenstators gibt es verschiedene Möglichkeiten, die aus dem Stand der Technik bekannt sind, z. B. wie dargestellt die Verwendung der beiden Halbschalen 174, 176, oder eine Umspritzung mit Isolationsmaterial, oder die Verwendung eines isolierenden Spezialpapiers. An der oberen Halbschale 176 sind auch die Kontaktstifte 106 angebracht, die z. B. in Fig. 1 bis 5 dargestellt sind. Fig. 14 zeigt, wie ein Wicklungsdraht 154 an dem Stift 106 befestigt ist. Letzterer ist hierzu in einem Vorsprung 162 der Halbschale 176 befestigt, und dieser Vorsprung dient auch als Distanzglied für die Leiterplatte 110, vgl. die Fig. 3 oder 4.

Auf den Statorpolen 140 bis 146 befinden sich bei diesem Beispiel konzentrierte Wicklungen 164, 166, 168, 170, deren Anschlüsse in der üblichen Weise mit den Kontaktstiften 106 verbunden sind. Naturgemäß wäre ebenso die Verwendung einer verteilten Wicklung und eines entsprechenden Blechpakets möglich.

Wie z. B. Fig. 1 zeigt, wird der bewickelte Innenstator 20 allseits mit einer Kunststoffschicht 62 umgeben, also auch an den Abschnitten 150 des Statorblechpakets 64, wobei dort nur eine dünne Isolationsschicht von z.B. 0,4 mm Dicke erzeugt wird.

Wie Fig. 1 zeigt, werden beim Umspritzen die Hohlräume des Innenstators 20 ausgefüllt, das Lagerrohr 56, 58 mit seinem Kragen 60 wird erzeugt, ferner die Wand 109 des Hohlraums 108 und die Speichen 134, 136, und schließlich auch das Lüftergehäuse 24, so dass man einen Lüfter sozusagen "aus einem Guss" erhält.

Nach der weiteren Montage (Leiterplatte 110, Anschlusskabel 116 (Fig. 5)) etc. wird der Außenrotor 28 so montiert, wie das in Fig. 9 dargestellt und dort auch beschrieben ist, und es wird schließlich ein Typenschild angebracht, etc.

Naturgemäß ist die Zahl der Stator- und Rotorpole, ihre Form etc. eine Funktion der gewünschten Eigenschaften des Motors, wie das dem Fachmann des Elektromaschinenbaus bekannt ist. In manchen Fällen kann z. B. das Statorblechpaket 64 auf der Luftspaltseite nur an einem kleineren Bereich bedeckt sein. Im Rahmen der vorliegenden Erfindung, die in den nachstehenden Ansprüchen definiert ist, sind vielfältige weitere Abwandlungen und Modifikationen möglich.

## Patentansprüche

1. Lüfter mit einem zu seinem Antrieb dienenden elektronisch kommutierten Außenläufermotor, welcher Motor aufweist:
Einen Innenstator (20) mit einem Statorblechpaket (64) und einer diesem zugeordneten Wicklungsanordnung (66; 164, 166, 168, 170), welcher Innenstator (20) eine zentrale Ausnehmung (149) zur Lagerung einer Welle (42) aufweist;
einen vom Innenstator (20) durch einen magnetisch wirksamen Luftspalt (99) getrennten permanentmagnetischen Rotor (28), welcher auf seiner Außenseite mit Lüfterflügeln (32) versehen ist und welcher eine in der zentralen Ausnehmung (149) des Innenstators (20) angeordnete Welle (42) aufweist;
eine am Innenstator (20) vorgesehene Kunststoffschicht (62), welche Kunststoffschicht (62) durch Umspritzung des Innenstators (20) hergestellt ist, und welche Kunststoffschicht (62) sich in die zentrale Ausnehmung (149) des Innenstators (20) erstreckt und dort ein Lagerrohr (56, 58) zur Aufnahme von Lagerelementen (48, 50) für die Lagerung der Welle (42) bildet;
ein mit der Kunststoffschicht (62) der zentralen Ausnehmung (149) einstückig ausgebildetes Wandelement (109), welches einen Hohlraum (108) zur Aufnahme von elektrischen Bauelementen (112) des Motors ausbildet, in welchem Hohlraum (108) elektrische Bauelemente (112) vorgesehen sind, welches Wandelement (109) auf der vom Rotor (28) abgewandten Seite des Statorblechpakets (64) vorgesehen ist;
und ein Lüftergehäuse (24), welches durch Verbindungselemente (134, 136) einstückig mit dem Wandelement (109) des Hohlraums (108) ausgebildet ist, und welches somit auch einstückig mit der Kunststoffschicht ausgebildet ist,
und welches zusammen mit dem Rotor (28) einen Luftdurchtrittskanal (142) bildet, in welchen die Lüfterflügel (32) ragen,
**dadurch gekennzeichnet, dass**
die Kunststoffschicht mindestens bereichsweise eine elektrische Isolation (62) für den an den magnetisch wirksamen Luftspalt (99) angrenzenden Teil des Statorblechpakets (64) bildet.

2. Lüfter nach Anspruch 1, bei welchem die Statorpole als ausgeprägte Pole ausgebildet sind und mit Spulenkörpern (174, 176) versehen sind, auf welche die Kunststoffschicht (162) aufgebracht ist,
wobei an einem Spulenkörper (176) Kontaktstifte (106) vorgesehen sind, welche zur Befestigung von Anschlüssen (154) der Statorwicklungen (164, 166, 168, 170) dienen, und
wobei die Kontaktstifte (106) jeweils an einem Vorsprung (162) des Spulenkörpers (176) befestigt sind, welcher Vorsprung sich in den Hohlraum (108) erstreckt, der zur Aufnahme von elektrischen Bauelementen (112) vorgesehen ist.

3. Lüfter nach einem der vorhergehenden Ansprüche, bei welchem die Kunststoffschicht (56, 58) ein Polyamid aufweist.

4. Lüfter nach einem der Ansprüche 1 oder 2, bei welchem die Kunststoffschicht aus PBT hergestellt ist.

5. Lüfter nach Anspruch 3 oder 4, bei welchem die Kunststoffschicht aus einem faserverstärkten Kunststoff hergestellt ist.

6. Lüfter nach einem der vorhergehenden Ansprüche, bei welchem das Lagerrohr (56, 58) auf seiner Innenseite mit Längsrippen (58) versehen ist.

7. Lüfter nach Anspruch 6, bei welchem eine durch die radial inneren Enden der Längsrippen (58) definierte Hüllkurve mindestens bereichsweise einen kreisförmigen Querschnitt aufweist.

8. Lüfter nach einem der vorhergehenden Ansprüche, bei welchem das Lagerrohr (56, 58) auf seiner dem Rotor (28) zugewandten Seite mit einem Kragen (60) versehen ist, in welchem ein Halteglied (96) befestigt ist, das zur Befestigung eines Lagerelements (48) im Lagerrohr (56, 58) dient.

9. Lüfter nach einem der vorhergehende Ansprüche, bei welchem der Rotor (28) eine Nabe (40) aufweist, die auf ihrer dem Innenstator (20) zugewandten Seite mit einem axialen Vorsprung (80) versehen ist, der zur Anlage gegen den Innenring eines benachbarten Wälzlagers (48) ausgebildet ist, um durch axialen Druck auf den Rotor (28) das Einpressen dieses Wälzlagers (48) in das Lagerrohr (56, 58) zu ermöglichen.

10. Lüfter nach Anspruch 8 oder 9, bei welchem der Rotor (28) mit mindestens einer Öffnung (44) versehen ist, welche das Einführen eines Werkzeugs (92) ermöglicht, mit dem das Halteglied (96) zur Anlage gegen den Außenring eines zugeordneten Wälzlagers (48) bringbar ist.

11. Lüfter nach Anspruch 9, bei welchem die Welle (42 des Rotors (28) durch eine Federkraft (78) beaufschlagt ist, um die Wälzlager (48, 50) gegeneinander zu verspannen.

12. Lüfter nach einem der vorhergehenden Ansprüche, bei welchem ein Verschlussglied nach Art eines Deckels (128) oder einer Kappe (127) vorgesehen ist, welches zum Verschließen des zur Aufnahme von elektrischen Bauelementen vorgesehenen Hohlraums (108) dient.

13. Lüfter nach Anspruch 12, bei welchem als Verschlussglied ein Deckel (126) vorgesehen ist, welcher durch eine Schweißverbindung mit einem Rand (109) des Gehäuseteils verbunden ist, welches zur Aufnahme der elektrischen Bauelemente (112) dient.

14. Lüfter nach Anspruch 13, bei welchem die Schweißverbindung durch Laserschweißen oder Ultraschallschweißen hergestellt ist.

15. Lüfter nach Anspruch 12, bei welchem das Verschlussglied (126; 127) durch eine Klebeverbindung oder eine mechanische Dichtverbindung mit dem Gehäuseteil verbunden ist, welches zur Aufnahme der elektrischen Bauteile (112) dient.

16. Lüfter nach einem der vorhergehenden Ansprüche, bei welchem die Wicklungsanordnung (66; 164, 166, 168, 170) mit elektrischen Anschlusselementen (106) versehen ist, welche aus der Kunststoffumhüllung des Innenstators (20) heraus ragen, insbesondere in Richtung zu dem Hohlraum (108), welcher auf der vom Rotor (28) abgewandten Seite des Statorblechpakets (64) ausgebildet ist.

## Claims

1. Fan having an electronically commutated external rotor motor which is used for driving said fan and comprises: an inner stator (20) which has a laminated stator core (64) and a winding arrangement (66; 164, 166, 168, 170) associated therewith, which inner stator (20) comprises a central recess (149) for bearing a shaft (42); a permanent magnetic rotor (28) which is separated from the inner stator (20) by a magnetically effective air gap (99), is provided with fan blades (32) on the outside thereof and comprises a shaft (42) arranged in the central recess (149) in the inner stator (20); a plastics layer (62) provided on the inner stator (20), which plastics layer (62) is produced by overmoulding the inner stator (20), and which plastics layer (62) extends into the central recess (149) in the inner stator (20) and there forms a bearing tube (56, 58) for receiving bearing elements (48, 50) for bearing the shaft (42); a wall element (109) which is integral with the plastics layer (62) of the central recess (149) and forms a cavity (108) for receiving electrical components (112) of the motor, in which cavity (108) electrical components (112) are provided, which wall element (109) is provided on the face of the laminated stator core (64) facing away from the rotor (28); and a fan housing (24) which is integral with the wall element (109) of the cavity (108) by means of connecting elements (134, 136), is therefore also integral with the plastics layer, and, together with the rotor (28), forms an air flow channel (142) into which the fan blades (32) protrude, **characterised in that** the plastics layer forms, at least in regions, electrical insulation (62) for the part of the laminated stator core (64) that adjoins the magnetically effective air gap (99).

2. Fan according to claim 1, wherein the stator poles are pronounced poles and are provided with coil bodies (174, 176) onto which the plastics layer (162) is applied, wherein contact pins (106) are provided on a coil body (176), which contact pins are used for fastening connections (154) of the stator windings (164, 166, 168, 170), and wherein the contact pins (106) are each fastened to a projection (162) on the coil body (176), which projection extends into the cavity (108) that is provided for receiving electrical components (112).

3. Fan according to either of the preceding claims, wherein the plastics layer (56, 58) comprises a polyamide.

4. Fan according to either claim 1 or claim 2, wherein the plastics layer is produced from PBT.

5. Fan according to either claim 3 or claim 4, wherein the plastics layer is produced from a fibre-reinforced plastics material.

6. Fan according to any of the preceding claims, wherein the bearing tube (56, 58) is provided with longitudinal ribs (58) on the inside thereof.

7. Fan according to claim 6, wherein an envelope curve defined by the radially inner ends of the longitudinal ribs (58) has a circular cross section at least in regions.

8. Fan according to any of the preceding claims, wherein the bearing tube (56, 58) is provided with a collar (60) on the end thereof facing the rotor (28), in which collar a holding member (96) is fastened, which is used to fasten a bearing element (48) in the bearing tube (56, 58).

9. Fan according to any of the preceding claims, wherein the rotor (28) comprises a hub (40) which is provided with an axial projection (80) on the face thereof facing the inner stator (20), which projection is designed so as to abut the inner ring of an adjacent rolling bearing (48), in order to allow said rolling bearing (48) to press into the bearing tube (56, 58) by means of axial pressure on the rotor (28).

10. Fan according to either claim 8 or claim 9, wherein the rotor (28) is provided with at least one opening (44) which allows a tool (92) to be introduced, by means of which tool the holding member (96) can be brought into abutment against the outer ring of an associated rolling bearing (48).

11. Fan according to claim 9, wherein the shaft (42) of the rotor (28) is subject to a spring force (78) in order to brace the rolling bearings (48, 50) against one another.

12. Fan according to any of the preceding claims, wherein a closure member in the form of a cover (128) or a cap (127) is provided, which is used to close the cavity (108) provided for receiving electrical components.

13. Fan according to claim 12, wherein a cover (126) is provided as a closure member, which cover is connected to an edge (109) of the housing part, which is used for receiving the electrical components (112), by a welded joint.

14. Fan according to claim 13, wherein the welded joint is produced by laser welding or ultrasonic welding.

15. Fan according to claim 12, wherein the closure member (126; 127) is connected to the housing part, which is used for receiving the electrical components (112), by an adhesive joint or a mechanical sealing joint.

16. Fan according to any of the preceding claims, wherein the winding arrangement (66; 164, 166, 168, 170) is provided with electrical connecting elements (106) which protrude out of the plastics casing of the inner stator (20), in particular towards the cavity (108), which is formed on the face of the laminated stator core (64) facing away from the rotor (28).

## Revendications

1. Ventilateur équipé d'un moteur à rotor extérieur servant à son entraînement et commuté électroniquement, lequel moteur comprend :
un stator intérieur (20) incluant un empilement (64) de tôles statoriques et un ensemble d'enroulements (66 ; 164, 166, 168, 170) associé à ce dernier, lequel stator intérieur (20) comporte un évidement central (149) dévolu au montage d'un arbre (42) ;
un rotor (28) à magnétisation permanente, qui est séparé d'avec ledit stator intérieur (20) par un entrefer (99) à action magnétique, est pourvu d'ailettes de ventilation (32) sur sa face extérieure, et présente un arbre (42) logé dans ledit évidement central (149) dudit stator intérieur (20) ;
une couche de matière plastique (62) prévue sur le stator intérieur (20),
ladite couche de matière plastique (62) étant produite par enrobage injecté sur ledit stator intérieur (20)
et ladite couche de matière plastique (62) pénétrant dans ledit évidement central (149) dudit stator intérieur (20), dans lequel elle forme un tube de support (56, 58) conçu pour recevoir des éléments d'appui (48, 50) dévolus au montage dudit arbre (42) ;
un élément de cloisonnement (109) qui est réalisé d'un seul tenant avec ladite couche de matière plastique (62) dudit évidement central (149), et donne naissance à une cavité (108) affectée à la réception de composants électriques (112) du moteur, cavité (108) dans laquelle des composants électriques (112) sont prévus, lequel élément de cloisonnement (109) est prévu sur le côté de l'empilement (64) de tôles statoriques pointant à l'opposé dudit rotor (28) ;
et un carter (24) de ventilateur, qui est réalisé d'un seul tenant avec ledit élément de cloisonnement (109) de ladite cavité (108), avec interposition d'éléments de liaison (134, 136), s'en trouve ainsi également réalisé d'un seul tenant avec la couche de matière plastique et forme, associativement audit rotor (28), un canal (142) de passage d'air dans lequel lesdites ailettes de ventilation (32) s'engagent,
**caractérisé par le fait que**
la couche de matière plastique forme, au moins par zones, une isolation électrique (62) dédiée à la partie de l'empilement (64) de tôles statoriques limitrophe de l'entrefer (99) à action magnétique.

2. Ventilateur selon la revendication 1, dans lequel les pôles statoriques sont réalisés en tant que pôles proéminents, et sont pourvus de corps de bobinage (174, 176) sur lesquels la couche de matière plastique (62) est déposée,
sachant que des broches de contact (106), prévues sur un corps de bobinage (176), servent à la fixation de connexions (154) des enroulements statoriques (164, 166, 168, 170) et sachant que lesdites broches de contact (106) sont respectivement fixées à une protubérance (162) dudit corps de bobinage (176), laquelle protubérance pénètre dans la cavité (108) prévue pour recevoir des composants électriques (112).

3. Ventilateur selon l'une des revendications précédentes, dans lequel la couche de matière plastique (62) comporte un polyamide.

4. Ventilateur selon l'une des revendications 1 ou 2, dans lequel la couche de matière plastique est produite en PBT.

5. Ventilateur selon la revendication 3 ou 4, dans lequel la couche de matière plastique est produite en une matière plastique à renfort fibreux.

6. Ventilateur selon l'une des revendications précédentes, dans lequel le tube de support (56, 58) est muni de nervures longitudinales (58) sur sa face intérieure.

7. Ventilateur selon la revendication 6, dans lequel une courbe enveloppante définie par les extrémités radialement intérieures des nervures longitudinales (58) présente, au moins par zones, une section transversale circulaire.

8. Ventilateur selon l'une des revendications précédentes, dans lequel le tube de support (56, 58) est doté, sur son côté tourné vers le rotor (28), d'un col (60) dans lequel est fixé un organe de retenue (96) servant à la fixation d'un élément d'appui (48) dans ledit tube de support (56, 58).

9. Ventilateur selon l'une des revendications précédentes, dans lequel le rotor (28) comporte un moyeu (40) pourvu, sur son côté tourné vers le stator intérieur (20), d'une saillie axiale (80) conçue pour venir en applique contre la bague intérieure d'un palier à roulement (48) voisin, de manière à permettre l'emmanchement à force de ce palier à roulement (48) dans le tube de support (56, 58), par pression axiale exercée sur ledit rotor (28).

10. Ventilateur selon la revendication 8 ou 9, dans lequel le rotor (28) est muni d'au moins un orifice (44) permettant l'insertion d'un outil (92) par lequel l'organe de retenue (96) peut être mis en applique contre la bague extérieure d'un palier à roulement (48) associé.

11. Ventilateur selon la revendication 9, dans lequel l'arbre (42) du rotor (28) est sollicité par la force d'un ressort (78), en vue d'assurer le serrage mutuel des paliers à roulement (48, 50).

12. Ventilateur selon l'une des revendications précédentes, dans lequel un organe obturateur, prévu à la manière d'un couvercle (126) ou d'un volet (127), sert à l'obturation de la cavité (108) prévue pour recevoir des composants électriques (112).

13. Ventilateur selon la revendication 12, dans lequel un couvercle (126) prévu en tant qu'organe obturateur est relié, par une liaison soudée, à un rebord (109) de la partie de carter qui sert à recevoir les composants électriques (112).

14. Ventilateur selon la revendication 13, dans lequel la liaison soudée est instaurée par soudage au laser ou par soudage aux ultrasons.

15. Ventilateur selon la revendication 12, dans lequel l'organe obturateur (126 ; 127) est relié, par une liaison collée ou une liaison mécanique étanche, à la partie de carter qui sert à recevoir les composants électriques (112).

16. Ventilateur selon l'une des revendications précédentes, dans lequel l'ensemble d'enroulements (66 ; 164, 166, 168, 170) est muni d'éléments de connexion électrique (106) qui font saillie au-delà de l'enveloppe en matière plastique du stator intérieur (20), notamment en direction de la cavité (108) ménagée du côté de l'empilement (64) de tôles statoriques qui pointe à l'opposé du rotor (28).
